# EUROPEAN PATENT SPECIFICATION

(11) **EP 3 511 756 B1**
(45) Date of publication and mention of the grant of the patent: **24.05.2023**
(21) Application number: 17847833.5
(22) Date of filing: 06.09.2017
(51) Int. Cl.: G02B 7/00, G02B 7/182, G02B 26/08, G21K 1/06

(54) **INSTRUMENT FOR MOVING AND POSITIONING OPTICAL ELEMENTS WITH NANOMETRIC MECHANICAL STABILITY AND RESOLUTION IN LIGHT LINES**
VORRICHTUNG ZUM BEWEGEN UND POSITIONIEREN VON OPTISCHEN ELEMENTEN MIT NANOMETRISCHER MECHANISCHER STABILITÄT UND AUFLÖSUNG IN LICHTLEITUNGEN
INSTRUMENT DE DÉPLACEMENT ET DE POSITIONNEMENT D'ÉLÉMENTS OPTIQUES À RÉSOLUTION ET STABILITÉ MÉCANIQUE NANOMÉTRIQUES DANS DES LIGNES DE LUMIÈRE

(30) Priority: 09.09.2016 BR 102016020900
(43) Date of publication of application: 17.07.2019
(73) Proprietor: Centro Nacional de Pesquisa em Energia e Materiais, 13083-100 Campinas - SP (BR)
(72) Inventor: RAMALHO GERALDES, Renan, 13083-100 Campinas (BR); MALAGODI CALIARI, Ricardo, 13083-100 Campinas (BR); SAVERI SILVA, Marlon, 13083-100 Campinas (BR); RUIJL,Theo Anjes Maria, 5688LB Oirschot (NL); SCHNEIDER, Ronald Maarten, 5655JX Eindhoven (NL)
(74) Representative: Studio Torta S.p.A.
(86) International application number: PCT/BR2017/050262
(87) International publication number: WO 2018/045441

(56) References cited:
- EP-A1- 1 321 822
- WO-A1-2017/146811
- DE-A1-102014 204 523
- JP-A- H0 610 898
- US-A- 5 283 682
- US-B2- 8 358 039

## Description

### TECHNICAL FIELD OF THE INVENTION

The invention is related to a novel instrument for moving and positioning of optical elements with nanometric mechanical stability and resolution in synchrotron beamlines .

An optical element of a synchrotron light source beamline may be a mirror, a diffraction crystal, a diffraction grating, a compound refractive lens (CRL), a Fresnell Zone Plate (FZP), etc.

### BACKGROUND OF THE INVENTION

Such instruments individually are known, and among them, the monochromators may be highlighted. A monochromator is an optical instrument that selects a narrow band of wavelengths (or energy) of light, or other radiation, from a broader range of wavelengths in the input of the instrument entry. It is important to note that it is generally possible to vary this band selection by means of distinct alignments of movements of the monochromator element, and accordingly, the delivery of the wavelength of interest by the instrument. An instrument capable of delivering monochromatic (or quasi-monochromatic, considering the existence of a band) light has many uses in scientific studies and in optics, since the materials properties may depend on or be investigated through their different interactions with different wavelengths. Although there are many ways to select a narrow band of wavelengths (that would be perceived on the visible range as a pure color), these forms are limited due to the range of radiation energy.

Generally, monochromators may resort to both the dispersion phenomenon, as in a prism, and the diffraction phenomenon, from a diffraction grating or a material with crystalline structure, to spatially separate the wavelengths or to ensure specific conditions of constructive interference for the radiation. In the case of the prisms and diffraction gratings, due to the characteristic of spatial scattering, output slots are typically integral parts of the monochromator. Concerning crystalline structures, they are typically used in the configurations of Bragg or Laue, which can also utilize posterial slots to limit the beamline or block spurious scatterings.

Studies with X rays allow for the investigation of properties of the matter that may not be accessible by other means. Methods using absorption, transmission, fluorescence, scattering, and diffraction provide information of matter composition and structure, in addition to allow for images and tomographies to be obtained. These methods are frequently non-destructive, and constitute a powerful and important set of tools for research, complementing other methods, such as chemical analysis and conventional microscopy.

The laboratories of synchrotron light, hereinafter only referred to as synchrotrons, are research facilities where broad range and high brightness electromagnetic radiation is generated from a storage ring. In this storage ring, high-energy electrons in relativistic conditions are capable of controllably emitting photons, the so-called synchrotron radiation, from interactions with powerful magnetic fields of bending magnets or insertion devices (undulators and wigglers). A similar technology is utilized in the so-called free electron lasers (FELs).

Some of the research fields on synchrotrons include: condensed matter physics, materials science, chemistry, biology, and medicine. As such, the experiments might cover applications that explore from sub-nanometric regions, within a cell, for instance, to samples of many centimeters in size, as in analysis of medical or veterinarian images. Thus, in addition to research aims, synchrotrons are also used for industrial applications, such as the micro-fabrication of devices.

From 2016 on, new generation synchrotron light sources started their operations. These new generation synchrotrons are characterized for very high brightness, or more specifically, for an ultra-low emittance, wherein the light source diffraction limit may be achieved by photons below a determined energy level. Therefore, this very low emittance is related to a very small light source (in the order of few micrometers for X-rays, for example), and with very low divergence. For this new characteristic to be possible and useful, extreme levels of stability are required for both the accelerator and the experimental stations, the so-called beamlines.

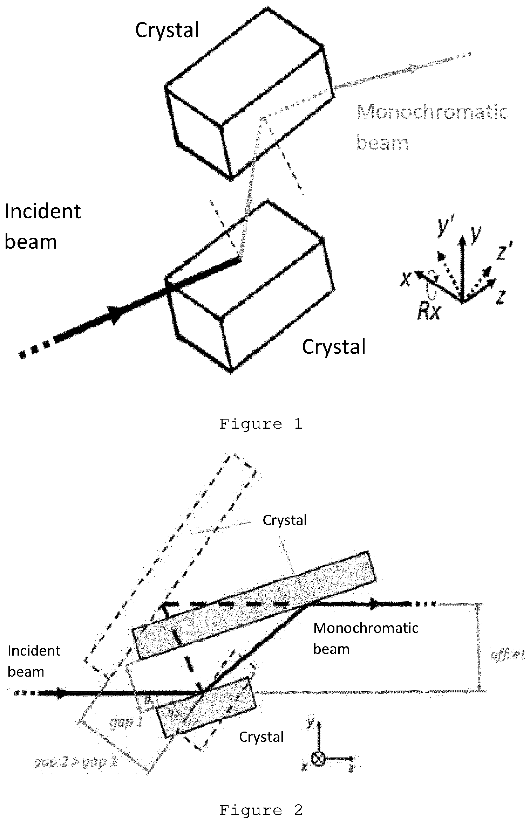

Double-crystal monochromators (DCMs) are a kind of instrument commonly utilized in X-rays beamlines for energies from few keV. The principle underlying these instruments is that a given condition of Bragg's diffraction may be obtained in two subsequent crystals, in order to select a narrow band of energy from the input (incident) beam, that has a broad range of energy, and to allow for the monochromatic beam leaving the instrument to be held in a constant position, regardless the variation of the Bragg's angle for different energies. The schematic diagram is shown in the Figure 1.

In fact, the Bragg's diffraction is a geometric phenomenon, since the condition of constructive interference for the selected radiation is dependent of the angle (named, for this reason, to as Bragg's angle) between the incident beam and the crystalline planes of the crystal. Accordingly, the determination of the energy for an experiment is related to the choice of the Bragg's angle on the monochromator, that is, the rotation of the crystals in relation to the incident beam. Thus, it is clear that one of the advantages of the DCMs in relation to other types of X-ray monochromators is to allow the separation (offset) between the incident and monochromatic beams to be kept constant, through the variation of the separation (gap) distance between the crystals as a function of the Bragg's angle. Figure 2 depicts an example of a DCM wherein the photon beams are propagated over the z-axis, and the rotation axis (rotation of the Bragg's angle) is in the x direction and coincides with both the face of the first crystal and the position of the incident beam. By representing the crystals in two different angles, it is clear that to keep the monochromatic beam in the same position (constant offset in relation to the incident beam) the distance between the crystals (gap) should be varied as a function of the Bragg's angle.

For the Bragg's condition to be met in both crystals, it is necessary to ensure a suitable alignment, which can be seen as the perfect parallelism between the two crystals. For this reason, in addition to a free degree of freedom for the rotation to adjust the Bragg's angle, and a free degree of freedom for the relative translation between the crystals for the gap variation, the DCMs typically rely on two degrees of freedom for relative rotation between the crystals, referred to as pitch and roll (terms from aviation), perpendicular to the direction of translation. Therefore, a basic DCM has, in addition to the main free degree of freedom for the Bragg's angle, three relative free degrees of freedom between the crystals: gap, pitch and roll, which may be combined in a single crystal or distributed according to any desired combination.

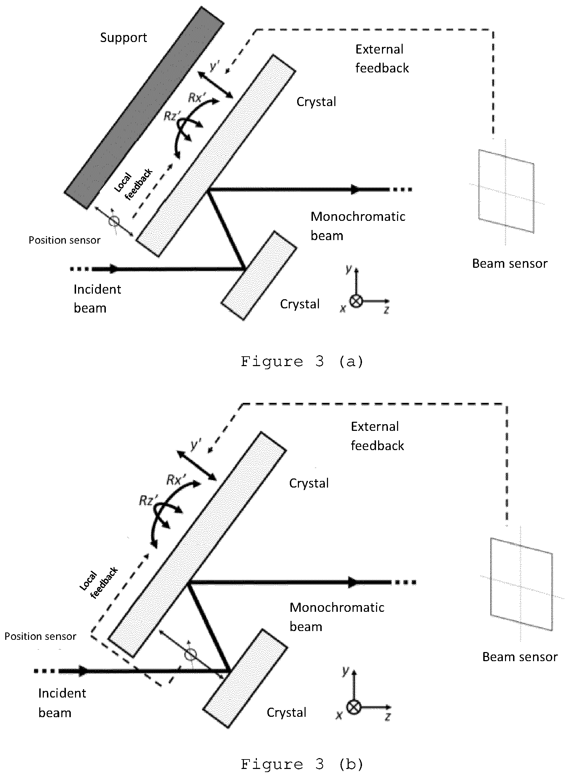

The mechanisms responsible for these degrees of freedom should present not only sufficiently fine moving resolution, but also suitable mechanical stability, to avoid undesirable dynamic effects, which may cause errors on the energy selection, reduction of the photon flow and/or shifts in the direction of propagation of the monochromatic beam in relation to the incident beam. Considering all mentioned degrees of freedom, the adjustments of pitch and roll have to meet the strictest requirements in terms of resolution and stability. Therefore, the mechanisms of these degrees of freedom typically utilize high-resolution mechanical actuators, such as piezoelectric actuators and micro motors. Once integrated to feedback signals, these mechanisms may compensate misalignments resulting from limitations of mounting, heat and/or gravitational effects, and parasitic movements on the gap mechanism. Figure 3 illustrates these three adjustment movements (y', Rx' and Rz') of the second crystal in relation to the first, highlighting the possible use of local or outer feedback signals, from position or beam sensors, respectively.

The existing construction technologies of DCMs are limited in terms of stability of the relative parallelism between the crystals, that is, in the pitch and roll. Specially in the DCMs with vertical offset between the input and output beams, that is, those DCMs in which the rotation axis of the Bragg's angle is horizontal, the best equipment have difficulties in dealing with angular variations higher than 100 nrad RMS (analyzed in a frequency band up to 2.5 kHz). Few vertical DCMs have already demonstrated a performance of approximately 50 nrad RMS under special conditions, that is, with the moving mechanisms being completely stopped. It is important to emphasize that DCMs of horizontal offset, that is, with vertical rotation axis, are less impacted by gravitational effects, and can present slightly better results, typically by a factor of 2. In both cases, however, if the stability of parallelism is evaluated while the mechanisms of the Bragg's angle and the gap are operating, which is necessary for experiments with continuous energy scan (the so-called flyscans), for example, the vibration levels are easily widened by over 10 times, easily exceeding 1 µrad RMS.

Due to the exceptional characteristics of the new generation synchrotron light sources, the future beamlines will require levels of stability lower than 10 nrad RMS, including during flyscans. It means that instruments with performance of 5 and 100 times better than the current state-of-the-art are needed. The results mentioned for operating instruments are the outcomes of efforts made by manufacturers and users over last years to make improvements to the existing technologies. As such, the evolution achieved in stability was very limited, representing a relative stagnation of the current technology, with practically no real perspective that new demands of new generation synchrotrons could be met.

In fact, the existing technology is based on mechanical projects focusing on upmost stiffness, while, contradictorily, the relative degrees of freedom are typically obtained from the stacking of individual movement mechanisms for gap, pitch and roll. This approach is limited by the finite stiffness of the middle parts and of the mechanical connections, which quickly deteriorates the mounting effective stiffness. In addition, the levels of stability required are so low that these adjustment mechanisms need to offer a high capability to reject disturbances (noises). These disturbances are caused by vibrations from the ground, sources of neighboring vibrations such as vacuum pumps, and DCM internal vibration sources, such as cooling systems, motors and actuators, and bearings. To achieve a noise rejection capability that presents a performance at least reasonable, adjustment mechanisms need to work with main loop feedback control with a bandwidth above 100 Hz. The piezoelectric and micro motor actuators currently utilized would hardly be able to achieve control bands above 20 Hz.

EP1321822 A1, DE 102014204523 A1 and WO 2017/146811 A1 disclose optical instruments having the features of the preamble of claim 1. The instruments disclosed therein fail to provide a solution to the technical problems defined above.

### DETAILED DESCRIPTION OF THE INVENTION

The object of the present invention is to provide a synchrotron light source beamline instrument that meets the high demands of the new generation of synchrotron light sources. This object is achieved by an instrument according to claim 1.

The active feedback can be improved (broader control band, typically above 100 Hz) with the disclosure of this instrument due to the use of the reaction mass and a suitable dynamic architecture. The reaction mass acts as a low-pass filter in the path of the reaction forces, such that only the direct path dynamics of the forces in the mounting structure limits the possible bandwidth. In addition, the suitable dynamics depends on low (or close to zero) stiffness between the mounting structure and reaction mass, therefore, the actuation means should be a low-stiffness actuator (inherently complacent actuator). Thus, in the device according to the invention, critical degrees of freedom are controlled by means of feedback loop of the sufficiently high main loop bandwidth, allowing for high disturbance rejection and high reference tracking capability.

An embodiment of the instrument according to the invention is characterized for having the main rotative structure around an axis perpendicular to the incident beam, and having the complementary structure movable in relation to the reference structure in only one translation, in the plane of the photon beams and perpendicular to the rotation axis of the main structure, such that the third set of leaf springs is little rigid in the direction of offset, but rigid in the other directions perpendicular to the direction of offset, as well as rigid to rotations. The mounting structure is preferably movable in relation to the complementary structure in only one translation, in parallel with the moving direction of the complementary structure in relation to the reference structure, but also in two rotations, around the axes perpendicular to the axis of translation, such that the second set of leaf springs is little rigid in the direction of translation, and in the two perpendicular rotations, but rigid in the two directions perpendicular to the direction of offset, as well as rigid in the rotation around this. Likewise, the reaction mass is preferably movable in relation to the complementary structure in only one translation, in parallel with the moving direction of the complementary structure in relation to the reference structure, but also in the two rotations, around the axes perpendicular to the axis of translation, such that the third set of leaf springs is little rigid in the direction of translation, and in the two perpendicular rotations, but rigid in the two directions perpendicular to the direction of offset, as well as rigid in the rotation around this. Still, the moving means between the mounting structure and reaction mass is preferably performed by three Lorentz type actuators (voice-coils), capable of acting on three low-stiffness degrees of freedom of the mounting structure and of the reaction mass.

Moreover, the instrument, according to the invention, is characterized for having the complementary mounting structure rigidly attached to the reference structure, and to which is mounted a complementary optical element. Preferably, the measurement means comprises three (or more) position sensors, such as means of position measurement, metering in the three degrees of freedom of interest the position of the mounting structure directly related to the complementary mounting structure, so as to increase the measure accuracy between the optical elements.

The instrument according to the invention and the above detailed description is especially advantageous in the embodiment of a double-crystal monochromator (DCM), wherein the optical elements are crystals, fixed to the mounting structure and to the complementary mounting structure. Moreover, it is desirable to utilize more than one pair of crystals, with different crystalline orientations in the same instrument. Thus, it is perfectly possible that more than one crystal is rigidly mounted on the mounting structure, whereas their complementary pairs are rigidly mounted on the complementary mounting structure. The embodiment of the instrument according to the invention as a DCM with control of main feedback loop with high bandwidth is capable of satisfying the demands of stability of new generation of synchrotron light source mounted DCMs (as described in the section Background of the invention) .

### BRIEF DESCRIPTION OF THE DRAWINGS

The invention will be clarified in more details based on diagrammatic drawings as follows:
Figure 1 illustrates the situation in which given condition of Bragg diffraction occurs in two subsequent crystals, filtering an incident beam of wide range, and delivering a monochromatic beam;
Figure 2 illustrates the principle of a DCM, in which the separation (gap) between the two crystals changes due to the rotation angle (Bragg's angle), to keep the position of the constant monochromatic beam;
Figure 3 shows a scheme with a possible configuration to three basic relative-adjustment movements between two crystals of a DCM and signals of local or outer feedback, from the position or beam sensors, respectively, an important difference in the manner of local feedback being highlighted between Figures (a) and (b).
Figures 4(a) and 4(b) show instruments which are not covered by the subject-matter of the claims. Figure 4(c) shows an embodiment of the instrument according to the present invention.

### DETAILED DESCRIPTION OF THE DRAWINGS

Figure 1 illustrates the situation in which given condition of Bragg diffraction occurs in two subsequent crystals, filtering an incident beam of wide range, and delivering a monochromatic beam. It is also indicated a base coordinate system (xyz) and the coordinate system rotated (xy'z') around Bragg's angle (Rx), shown in the example on the x-axis.

Figure 2 illustrates the principle of a DCM, in which the separation (gap) between the two crystals varies as function of the rotation angle (Bragg's angle), to keep the position of the constant monochromatic beam, in relation to the incident beam with a fixed separation (offset). It is possible to see, for a given Bragg's angle θ₁, less than the other arbitrary Bragg's angle θ₂, the correspondent gap (gap 1) is smaller than the gap (gap 2) corresponding to θ₂.

Figure 3 shows two crystals of a DCM in a given Bragg's angle, with the essential relative adjustments between the first and second crystals, namely: gap (y'), pitch (Rx'), and roll (Rz') (in which the indication ' concerns the rotational coordinate system, according to Bragg's angle). Figure 3(a) shows signals of feedback typically utilized, namely: local feedback, typically performed with the moving mechanism of the crystal and metering the position of the crystal in relation to its support; and external feedback, utilizing the signal of a beam sensor downstream the DCM for actuation on the adjustment mechanisms of the crystal. There are instruments that are based only on one of the types of feedback, as well as instruments that utilize both in a complementary manner. Figure 3(b) also presents both local and outer feedback signals, but emphasizes that, according to the present invention, the position metering in the local feedback should be made between the crystals, or between their mounting structures, not in relation to a support of one of the crystals, which brings no direct information related to the position and stability of the complementary crystal. Moreover, according to the invention, for a bandwidth of a sufficiently high main loop control (> 100 Hz) to be possible, the speed of the feedback system should also be high, that is, around 10 kHz. As these speeds are not typically available on beam sensors, the means of position measurement related to the reference structure was put as mandatory. However, if the signal of a beam sensor exhibits the needed accuracy and speed characteristics, this signal could replace the local means of position measurement of the instrument.

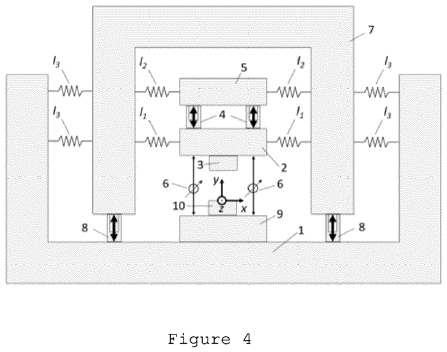

Figure 4 schematically shows instruments constituted as a DCM, comprising an optical element (3) rigidly mounted to the reference structure (2), which position in relation to the reference structure (1) is measured by means of the means of position measurement(6) . The movement of the mounting structure (2) occurs through the moving means (4) due to the position measurement of the means of position measurement (6), both integrated to the system of main feedback loop of the instrument. Differently from the traditional instruments, the moving means forces (4) needed to moving the mounting structure (2), react in a reaction mass (5), acting as a dynamic filter and allows for the bandwidth of the feedback system to be only limited by the inner dynamics of the mounting structure (2), and of the optical element (3), and not by the dynamics (resonances) of the other components of the instrument, as it is the case of the already existing instruments. Both mounting structure (2) and reaction mass (5) attachment to the reference structure are made by spring means (*l₁* and *l₂*), which are able to ensure suitable stiffness properties, that is, to define free and restrict degrees of freedom, according to the movements of interest of the optical element in relation to the photon beam, as well as eliminate non-linearities resulting from mechanical guides with friction. The instrument also comprises a complementary structure (7) between the reference structure (1) and the assembly formed by the mounting structure (2) and the reaction mass (5), aiming at increasing the amplitude of movement between the mounting structure (2) and the reference structure (1), since the spring means necessarily present limited amplitude of movement. Additionally, the DCM comprises a complementary mounting structure (9), and a complementary optical element (10). According to the coordinate system of the Figure, the photon beam propagates through the z-axis, coplanarly to the rotation axis of the reference structure (1) (x-axis), hitting the first crystal of the DCM, the complementary optical element (10). The first crystal (10) is rigidly fixed to the complementary mounting structure (9), which is rigidly fixed to the main structure (1), that is, there are no relative free degrees of freedom for the adjustment between the crystal (10) and the main structure (1). The complementary structure (7) is attached to the main structure (1) through 5 (or 6) folded leaf springs (l₃), giving a single relative free degree of freedom of translation between these structures, whose function is to allow for the adjustment of the gap at a first level. The actuation means (8) of the complementary structure (7) may be performed in different manners, as for example via the stepper, servomotor or linear motor, among others. Eventually, both the mounting structure (2) to which the second crystal, the optical element (3), is rigidly fixed, and the reaction mass (5) are attached to the complementary structure (7) by means of a set of 3 folded leaf springs (l₁ and l₂), giving three relative degrees of freedom between them and the complementary structure (7), namely: gap (second level), pitch and roll. In fact, by adequately projecting the folded leaf springs, they can be combined to embody mechanical guides only with desired free degrees of freedom, by suppressing the movement of the elements in the non-controllable degrees of freedom due to the characteristics of high stiffness. For the actuation over these three free degrees of freedom and the positioning and stabilization of the mounting structure (2) in relation to the complementary mounting structure (9), the moving means (4) is performed as three Lorentz type actuators (voice coils), which have their forces actuating between the mounting structure (2) and reaction mass (5), providing an "inner" dynamics of forces to adjust the accuracy of the gap and to control the parallelism between the crystals, avoiding that these forces are propagated as disturbances for (1), (7), (9), and (10). The feedback is provided by the means of position measurement (6), performed with 3 (or 4) interferometric distance sensors, that can be combined to measure the distance and two angles of interest between the metrological references of the two crystals, that is, the mounting structure (2) and complementary mounting structure (9). The interferometric distance sensors contemplate: the characteristics of great dynamic range, being capable of metering with resolution and nanometric accuracy over tens of millimeters; and high speeds of measurement, allowing for the high stability and high dynamic performance required in the new generation synchrotron light source beamline mounted DCMs. It was chosen by simplicity not to describe in details the manner in which this rotation of the reference structure occurs in relation to the photon beam, but preferably it was decided to use a system of double-bearing (from both sides of the reference structure) and direct drive type motor for rotation of the synchrotron light source beamline mounted DCM, in relation to a base installed into the synchrotron light source beamline. It is important to note, however, that the rotative system of the main structure itself, may be performed as described above, wherein the elements from (2) to (10) of the instrument herein detailed would be grouped as the new "optical element", and the main structure of the instrument herein detailed would be equivalent to the mounting structure of this new instrument.

Eventually, it should be emphasized again that, although the invention is exemplified by means of a synchrotron light source beamline mounted DCM in the Figures, that it is not limited anyway to the exemplified embodiments in these drawings. The invention may be extended, therefore, to any and all embodiments that are within the scope defined by the claims. Therefore, the instrument of the present invention can be an instrument to position mirrors, FZPs or CRLs in synchrotron beam lines.

## Claims

1. An instrument for moving and positioning of optical elements with nanometric mechanical stability and resolution in synchrotron beamlines, comprising:
- a reference structure (1);
- a mounting structure (2);
- an optical element (3) mounted to the mounting structure (2);
- moving means (4) configured to move the mounting structure (2) in relation to the reference structure (1);
- at least one reaction mass (5) attached in a movable manner to the mounting structure (2), configured to receive the reaction force resulting from the positioning of the mounting structure (2) in relation to the reference structure (1), through an actuation of the moving means (4);
- a means of position measurement (6) configured to measure a position of the mounting structure (2) in relation to the reference structure (1);
- a main feedback loop including the means of position measurement (6) and the moving means (4), configured to use information from the means of position measurement (6) to control the position of the mounting structure (2) through the moving means (4),
**characterized by** including:
- a complementary mounting structure (9) rigidly mounted to the reference structure (1);
- a complementary optical element (10) rigidly mounted to the complementary mounting structure (9),
- a complementary structure (7) attached in a movable manner to the reference structure (1),
- a complementary actuation means (8) configured to move the complementary structure (7) in relation to the reference structure (1),
- a first set of spring means (l₁) by which the mounting structure (2) is attached in a movable manner to the complementary structure (7) thereby allowing relative translation or rotation movements along or about one or more axes,
- a second set of spring means (l₂) by which the reaction mass (5) is attached in a movable manner to the complementary structure (7) thereby allowing relative translation and rotation movements along or about one or more axes, and
a third set of spring means (l₃) by which the complementary structure (7) is connected to the reference structure (1).

2. The instrument according to the claim 1, **characterized in that** the moving means (4) comprises a minimum number of Lorentz type actuators equal to a number of free degrees of freedom of the mounting structure (2), that is the same number of free degrees of freedom of the reaction mass (5).

3. The instrument according to the claim 1, **characterized in that** the means of position measurement (6) consists of a minimum number of position sensors equal to a number of free degrees of freedom of the mounting structure (2), that is the same number of free degrees of freedom of the reaction mass (5).

4. The instrument according to claim 1, **characterized in that** each of the first, second and/or third set of spring means (l₁, l₂, l₃) comprise a leaf spring or a set of leaf springs.

5. The instrument according to any of the preceding claims, **characterized in that** the reference structure (1) has a rotation axis (x) suitable for being perpendicular to a direction of propagation of an incident beam in a beamline (z), and
the complementary structure (7) is movable in relation to the reference structure (1) only in one translation direction (y') perpendicular to the rotation axis (x) of the reference structure (1) and has a first rotation axis (x') collinear to the rotation axis (x) of the reference structure (1) and a second rotation axis (z') perpendicular to the first rotation axis (x') such that
the third set of leaf springs (l₃) is less rigid in the translation direction (y') of the complementary structure (7) than in first and second directions along the first and second rotation axis (x', z'), respectively, and first, second and third rotation directions (Rx', Ry' and Rz'), wherein the first rotation direction (Rx') is the rotation direction around the first rotation axis (x') perpendicular to the translation direction (y') of the complementary structure (7) , the second rotation direction (Rz') is the rotation direction around the second rotation axis (z') perpendicular to the translation direction (y') of the complementary structure (7), and the third rotation direction (Ry') is a rotation direction around the translation direction (y') of the complementary structure (7).

6. The instrument according to the claim 5, **characterized in that** the mounting structure (2) is movable in relation to the complementary structure (7) in only one translation direction (y') parallel to the translation direction of the complementary structure (7) in relation to the reference structure (1), and is movable in the first and second rotation directions (Rx' and Rz') around the first rotation axis (x') and the second rotation axis (z') perpendicular to the translation direction (y'), such that
the first set of leaf springs (l₁) is less rigid in the translation direction (y') and in the first and second rotation directions (Rx', Rz') than in the first and second directions (x', z') perpendicular to the translation direction (y'), as well as in the third rotation direction (Ry').

7. The instrument according to the claim 6, **characterized in that** the reaction mass (5) is movable in relation to the complementary structure (7) in only one translation direction (y') parallel to the translation direction of the complementary structure (7) in relation to the reference structure (1), and the first and second rotation directions (Rx', Rz') around the first and second rotation axis (x', z') perpendicular to the translation direction (y'), such that
the second set of leaf springs (l₂) is less rigid in the translation direction (y') and in the first and second rotation directions (Rx', Rz') than in the two directions (x', z') perpendicular to the translation direction (y'), as well as in the third rotation direction (Ry').

8. The instrument according to the claim 1, **characterized in that** the instrument is a double-crystal monochromator and the optical element (3) and the complementary optical element (10) are diffraction crystals, the first one (3) being rigidly mounted to the mounting structure (2) and the second one (10) being rigidly mounted to the complementary mounting structure (9).

9. The instrument according to the claim 8, **characterized in that** the optical element (3) and the complementary optical element (10) comprise multiple pairs of crystals with distinct characteristics, with one element of each pair rigidly mounted to the mounting structure (2) and the other element of each pair rigidly mounted to the complementary mounting structure (9).

10. The instrument according to claim 3, **characterized in that** the positioning sensors of the means of position measurement (6) comprise interferometric offset sensors, with reading rates of at least 10kHz and subnanometric resolutions.

## Patentansprüche

1. Instrument zum Bewegen und Positionieren von optischen Elementen mit mechanischer Stabilität und Auflösung im Nanometerbereich in Synchrotron-Strahlführungen, umfassend:
- eine Referenzstruktur (1);
- eine Montagestruktur (2);
- ein optisches Element (3), das an der Montagestruktur (2) montiert ist;
- Bewegungsmittel (4), die konfiguriert sind, die Montagestruktur (2) bezüglich der Referenzstruktur (1) zu bewegen;
- mindestens eine Reaktionsmasse (5), die in einer beweglichen Weise an der Montagestruktur (2) befestigt ist, die konfiguriert ist, die Reaktionskraft, die aus dem Positionieren der Montagestruktur (2) bezüglich der Referenzstruktur (1) resultiert, durch eine Betätigung der Bewegungsmittel (4) aufzunehmen;
- Mittel zur Positionsmessung (6), die konfiguriert sind, eine Position der Montagestruktur (2) bezüglich der Referenzstruktur (1) zu messen:
- eine Haupt-Rückkopplungsschleife, die die Mittel zur Positionsmessung (6) und die Bewegungsmittel (4) enthält, die konfiguriert ist, Informationen von den Mitteln zur Positionsmessung (6) zu verwenden, um die Position der Montagestruktur (2) durch die Bewegungsmittel (4) zu steuern,
**dadurch gekennzeichnet, dass** es enthält:
- eine komplementäre Montagestruktur (9), die starr an der Referenzstruktur (1) montiert ist;
- ein komplementäres optisches Element (10), das starr an der komplementären Montagestruktur (9) montiert ist,
- eine komplementäre Struktur (7), die in einer beweglichen Weise an der Referenzstruktur (1) befestigt ist,
- komplementäre Betätigungsmittel (8), die konfiguriert sind, die komplementäre Struktur (7) bezüglich der Referenzstruktur (1) zu bewegen,
- einen ersten Satz von Federmitteln (1₁), durch den die Montagestruktur (2) in einer beweglichen Weise an der komplementären Struktur (7) befestigt ist, wodurch relative Translations- oder Rotationsbewegungen entlang oder um eine oder mehrere Achsen erlaubt sind,
- einen zweiten Satz von Federmitteln (1₂), durch den die Reaktionsmasse (5) in einer beweglichen Weise an der komplementären Struktur (7) befestigt ist, wodurch relative Translations- oder Rotationsbewegungen entlang oder um eine oder mehrere Achsen erlaubt werden, und
- einen dritten Satz von Federmitteln (1₃), durch den die komplementäre Struktur (7) mit der Referenzstruktur (1) verbunden ist.

2. Instrument nach Anspruch 1, **dadurch gekennzeichnet, dass** die Bewegungsmittel (4) eine minimale Zahl von Lorentz-Aktoren umfassen, die einer Zahl von freien Freiheitsgraden der Montagestruktur (2), d. h. der gleichen Zahl von freien Freiheitsgraden der Reaktionsmasse (5), entspricht.

3. Instrument nach Anspruch 1, **dadurch gekennzeichnet, dass** die Mittel zur Positionsmessung (6) aus einer minimalen Zahl von Positionssensoren bestehen, die einer Zahl von freien Freiheitsgraden der Montagestruktur (2), d. h. der gleichen Zahl von freien Freiheitsgraden der Reaktionsmasse (5), entspricht.

4. Instrument nach Anspruch 1, **dadurch gekennzeichnet, dass** jeder des ersten, des zweiten und/oder des dritten Satzes von Federmitteln (1₁, 1₂, 1₃) eine Blattfeder oder einen Satz von Blattfedern umfasst.

5. Instrument nach einem der vorhergehenden Ansprüche, **dadurch gekennzeichnet, dass** die Referenzstruktur (1) eine Rotationsachse (x) aufweist, die dafür geeignet ist, zu einer Ausbreitungsrichtung eines einfallenden Strahls in einer Strahlführung (z) senkrecht zu sein, und
die komplementäre Struktur (7) bezüglich der Referenzstruktur (1) nur in einer Translationsrichtung (y') senkrecht zu der Rotationsachse (x) der Referenzstruktur (1) bewegt werden kann, und eine erste Rotationsachse (x'), die kollinear zu der Rotationsachse (x) der Referenzstruktur (1) ist, und eine zweite Rotationsachse (z'), die senkrecht zu der ersten Rotationsachse (x') ist, aufweist, so dass der dritte Satz von Blattfedern (1₃) in der Translationsrichtung (y') der komplementären Struktur (7) weniger starr ist als in erster und zweiter Richtung entlang der ersten bzw. zweiten Rotationsachse (x', z') und erster, zweiter und dritter Rotationsrichtung (Rx', Ry' und Rz'), wobei die erste Rotationsrichtung (Rx') die Rotationsrichtung um die erste Rotationsachse (x') ist, die senkrecht zu der Translationsrichtung (y') der komplementären Struktur (7) ist, die zweite Rotationsrichtung (Rz') die Rotationsrichtung um die zweite Rotationsachse (z') ist, die senkrecht zu der Translationsrichtung (y') der komplementären Struktur (7) ist, und die dritte Rotationsrichtung (Ry') eine Rotationsrichtung um die Translationsrichtung (y') der komplementären Struktur (7) ist.

6. Instrument nach Anspruch 5, **dadurch gekennzeichnet, dass** die Montagestruktur (2) bezüglich der komplementären Struktur (7) nur in einer Translationsrichtung (y') parallel zu der Translationsrichtung der komplementären Struktur (7) bezüglich der Referenzstruktur (1) bewegt werden kann, und in der ersten und zweiten Rotationsrichtung (Rx' und Rz') um die erste Rotationsachse (x') und die zweite Rotationsachse (z') senkrecht zu der Translationsrichtung (y') bewegt werden kann, so dass der erste Satz von Blattfedern (1₁) in der Translationsrichtung (y') und in der ersten und zweiten Rotationsrichtung (Rx', Rz') weniger starr ist als in der ersten und zweiten Richtung (x', z') senkrecht zu der Translationsrichtung (y'), sowie in der dritten Rotationsrichtung (Ry').

7. Instrument nach Anspruch 6, **dadurch gekennzeichnet, dass** die Reaktionsmasse (5) bezüglich der komplementären Struktur (7) nur in einer Translationsrichtung (y') parallel zu der Translationsrichtung der komplementären Struktur (7) bezüglich der Referenzstruktur (1), und der ersten und zweiten Rotationsrichtung (Rx', Rz') um die erste und die zweite Rotationsachse (x', z') senkrecht zu der Translationsrichtung (y') bewegt werden kann, so dass der zweite Satz von Blattfedern (1₂) in der Translationsrichtung (y') und in der ersten und zweiten Rotationsrichtung (Rx', Rz') weniger starr ist als in den zwei Richtungen (x', z') senkrecht zu der Translationsrichtung (y'), sowie in der dritten Rotationsrichtung (Ry').

8. Instrument nach Anspruch 1, **dadurch gekennzeichnet, dass** das Instrument ein Doppelkristall-Monochromator ist und das optische Element (3) und das komplementäre optische Element (10) Beugungskristalle sind, wobei der erste (3) starr an die Montagestruktur (2) montiert ist und der zweite (10) starr an die komplementäre Montagestruktur (9) montiert ist.

9. Instrument nach Anspruch 8, **dadurch gekennzeichnet, dass** das optische Element (3) und das komplementäre optische Element (10) mehrere Kristall-Paare mit unterschiedlichen Eigenschaften umfassen, wobei ein Element jedes Paares starr an die Montagestruktur (2) und das andere Element jedes Paares starr an die komplementäre Montagestruktur (9) montiert ist.

10. Instrument nach Anspruch 3, **dadurch gekennzeichnet, dass** die Positionierungssensoren der Mittel zur Positionsmessung (6) interferometrische Versatz-Sensoren mit Ausleseraten von mindestens 10 kHz und Auflösung im Subnanometerbereich umfassen.

## Revendications

1. Instrument pour le déplacement et le positionnement d'éléments optiques avec une stabilité et une résolution mécaniques nanométriques dans des lignes de faisceaux de synchrotron, comprenant :
- une structure de référence (1) ;
- une structure de montage (2) ;
- un élément optique (3) monté sur la structure de montage (2) ;
- un moyen de déplacement (4) configuré pour déplacer la structure de montage (2) par rapport à la structure de référence (1) ;
- au moins une masse de réaction (5) fixée de manière mobile à la structure de montage (2), configurée pour recevoir la force de réaction résultant du positionnement de la structure de montage (2) par rapport à la structure de référence (1), par un actionnement du moyen de déplacement (4) ;
- un moyen de mesure de position (6) configuré pour mesurer une position de la structure de montage (2) par rapport à la structure de référence (1) ;
- une boucle de rétroaction principale comportant le moyen de mesure de position (6) et le moyen de déplacement (4), configurée pour utiliser des informations provenant du moyen de mesure de position (6) pour commander la position de la structure de montage (2) par le moyen de déplacement (4),
**caractérisé en ce qu'**il comporte :
- une structure de montage complémentaire (9) montée rigidement sur la structure de référence (1) ;
- un élément optique complémentaire (10) monté rigidement sur la structure de montage complémentaire (9),
- une structure complémentaire (7) fixée de manière mobile à la structure de référence (1),
- un moyen d'actionnement complémentaire (8) configuré pour déplacer la structure complémentaire (7) par rapport à la structure de référence (1),
- un premier ensemble de moyens de ressort (l₁) par lesquels la structure de montage (2) est fixée de manière mobile à la structure complémentaire (7), permettant ainsi des déplacements de translation ou de rotation relatifs le long ou autour d'un ou plusieurs axes,
- un deuxième ensemble de moyens de ressort (l₂) par lesquels la masse de réaction (5) est fixée de manière mobile à la structure complémentaire (7), permettant ainsi des déplacements de translation et de rotation relatifs le long ou autour d'un ou plusieurs axes, et
un troisième ensemble de moyens de ressort (l₃) par lesquels la structure complémentaire (7) est connectée à la structure de référence (1).

2. Instrument selon la revendication 1, **caractérisé en ce que** le moyen de déplacement (4) comprend un nombre minimum d'actionneurs de type Lorentz égal à un nombre de degrés libres de liberté de la structure de montage (2), c'est-à-dire le même nombre de degrés libres de liberté de la masse de réaction (5).

3. Instrument selon la revendication 1, **caractérisé en ce que** le moyen de mesure de position (6) consiste en un nombre minimum de capteurs de position égal à un nombre de degrés libres de liberté de la structure de montage (2), c'est-à-dire le même nombre de degrés libres de liberté de la masse de réaction (5).

4. Instrument selon la revendication 1, **caractérisé en ce que** chacun des premier, deuxième et/ou troisième ensembles de moyens de ressort (l₁, l₂, l₃) comprend un ressort à lames ou un ensemble de ressorts à lames.

5. Instrument selon l'une quelconque des revendications précédentes, **caractérisé en ce que** la structure de référence (1) a un axe de rotation (x) adapté pour être perpendiculaire à une direction de propagation d'un faisceau incident dans une ligne de faisceau (z), et
la structure complémentaire (7) est mobile par rapport à la structure de référence (1) uniquement dans une direction de translation (y') perpendiculaire à l'axe de rotation (x) de la structure de référence (1) et a un premier axe de rotation (x') colinéaire à l'axe de rotation (x) de la structure de référence (1) et un deuxième axe de rotation (z') perpendiculaire au premier axe de rotation (x'), de sorte que le troisième ensemble de ressorts à lames (l₃) soit moins rigide dans la direction de translation (y') de la structure complémentaire (7) que dans des première et deuxième directions le long des premier et deuxième axes de rotation (x', z') respectivement, et des première, deuxième et troisième directions de rotation (Rx', Ry' et Rz'), dans lequel la première direction de rotation (Rx') est la direction de rotation autour du premier axe de rotation (x') perpendiculaire à la direction de translation (y') de la structure complémentaire (7), la deuxième direction de rotation (Rz') est la direction de rotation autour du deuxième axe de rotation (z') perpendiculaire à la direction de translation (y') de la structure complémentaire (7), et la troisième direction de rotation (Ry') est une direction de rotation autour de la direction de translation (y') de la structure complémentaire (7).

6. Instrument selon la revendication 5, **caractérisé en ce que** la structure de montage (2) est mobile par rapport à la structure complémentaire (7) uniquement dans une direction de translation (y') parallèle à la direction de translation de la structure complémentaire (7) par rapport à la structure de référence (1), et est mobile dans les première et deuxième directions de rotation (Rx' et Rz') autour du premier axe de rotation (x') et du deuxième axe de rotation (z') perpendiculaires à la direction de translation (y'), de sorte que le premier ensemble de ressorts à lames (l₁) soit moins rigide dans la direction de translation (y') et dans les première et deuxième directions de rotation (Rx', Rz') que les première et deuxième directions (x', z') perpendiculaires à la direction de translation (y'), ainsi que dans la troisième direction de rotation (Ry').

7. Instrument selon la revendication 6, **caractérisé en ce que** la masse de réaction (5) est mobile par rapport à la structure complémentaire (7) uniquement dans une direction de translation (y') parallèle à la direction de translation de la structure complémentaire (7) par rapport à la structure de référence (1), et les première et deuxième directions de rotation (Rx', Rz') autour des premier et deuxième axes de rotation (x', z') perpendiculaires à la direction de translation (y'), de sorte que le deuxième ensemble de ressorts à lames (l₂) soit moins rigide dans la direction de translation (y') et dans les première et deuxième directions de rotation (Rx', Rz') que dans les deux directions (x', z') perpendiculaires à la direction de translation (y'), ainsi que dans la troisième direction de rotation (Ry').

8. Instrument selon la revendication 1, **caractérisé en ce que** l'instrument est un monochromateur à double cristal, et l'élément optique (3) et l'élément optique complémentaire (10) sont des cristaux de diffraction, le premier (3) étant monté rigidement sur la structure de montage (2) et le deuxième (10) étant monté rigidement sur la structure de montage complémentaire (9).

9. Instrument selon la revendication 8, **caractérisé en ce que** l'élément optique (3) et l'élément optique complémentaire (10) comprennent des paires multiples de cristaux ayant des caractéristiques distinctes, un élément de chaque paire étant monté rigidement sur la structure de montage (2) et l'autre élément de chaque paire étant monté rigidement sur la structure de montage complémentaire (9).

10. Instrument selon la revendication 3, **caractérisé en ce que** les capteurs de positionnement du moyen de mesure de position (6) comprennent des capteurs interférométriques à décalage, avec des vitesses de lecture d'au moins 10 kHz et des résolutions sub-nanométriques.
